# FASCICULE DE BREVET EUROPEEN

(11) **EP 2 744 855 B1**
(45) Date de publication et mention de la délivrance du brevet: **18.07.2018**
(21) Numéro de dépôt: 12750356.3
(22) Date de dépôt: 16.08.2012
(51) Int. Cl.: C08K 3/36, C08K 9/06, C09C 1/30

(54) **PROCÉDÉ DE PRÉPARATION D'UNE SILICE GREFFÉE PAR UN COMPOSÉ ORGANOSILICIÉ**
VERFAHREN ZUR HERSTELLUNG VON MIT EINER ORGANOSILIZIUMVERBINDUNG GEPFROPFTEN KIESELSÄURE
METHOD FOR PREPARING A SILICA GRAFTED WITH AN ORGANOSILICON COMPOUND

(30) Priorité: 16.08.2011 FR 1157357
(43) Date de publication de la demande: 25.06.2014
(73) Titulaire: ELKEM SILICONES France SAS, 69003 Lyon (FR); Ecole Nationale Superieure De Chimie Montpellier (ENSC), 34000 Montpellier (FR); Université Montpellier 2, Sciences et Techniques, 34090 Montpellier (FR); CENTRE NATIONAL DE LA RECHERCHE SCIENTIFIQUE -CNRS-, 75016 Paris (FR)
(72) Inventeur: MARIOT, David, F-69008 Lyon (FR); GANACHAUD, François, F-69150 Décines (FR)
(74) Mandataire: Lavoix
(86) Numéro de dépôt international: PCT/EP2012/066021
(87) Numéro de publication internationale: WO 2013/024137

(56) Documents cités:
- EP-A1- 0 125 418
- EP-A1- 0 900 829
- EP-A1- 1 559 744
- DE-A1-102007 024 094

## Description

L'invention concerne un procédé de préparation de silice greffée par un composé organosilicié. L'invention concerne plus particulièrement un procédé de préparation de silice greffée par un composé organosilicié simple à mettre en oeuvre, peu énergivore et permettant de greffer des composés organosiliciés non fonctionnalisés ou fonctionnalisés, notamment vinylés.

L'invention concerne également une silice greffée par un composé organosilicié, fonctionnalisé ou non fonctionnalisé, ainsi que son utilisation dans des compositions, notamment dans des compositions d'élastomère de silicone.

Les élastomères de silicone sont des élastomères synthétiques présentant un bon compromis entre propriétés mécaniques et chimiques.

Cependant, les propriétés mécaniques des élastomères de silicone seuls, notamment la résistance à la déchirure et la résistance à la rupture, sont insuffisantes au regard des applications industrielles dans lesquelles ils sont utilisés.

Une solution pour renforcer ces propriétés consiste en l'incorporation d'une charge dans l'élastomère de silicone, appelée charge de renfort. Cette charge est notamment de la silice, sous une forme pyrogénée ou sous une forme précipitée.

Cependant, les charges de renfort utilisées sont préparées par des procédés nécessitant des températures élevées et donc énergivores. De plus, la présence de cette charge peut provoquer un durcissement excessif de l'élastomère de silicone, entraînant ainsi des problèmes quant à son stockage et à sa mise en oeuvre ultérieure.

Il a ainsi été envisagé différents traitements de surface de la silice, afin de la rendre hydrophobe et d'améliorer sa compatibilité avec les élastomères de silicone.

Le document DE 10 2007 024094 décrit une silice traitée par un polysiloxane cyclique, ainsi qu'un procédé de préparation d'une telle silice par la réaction entre la silice et le polysiloxane cyclique. Ce document enseigne majoritairement une étape de pulvérisation du polysiloxane cyclique à la surface de la silice.

Le document FR 2 395 952 décrit un procédé de préparation par voie humide à pH basique d'une silice greffée par un composé organosilane, comprenant le mélange de la silice avec le composé organosilane, suivi d'une étape de recuit. La présence de cette étape de recuit est pénalisante pour la mise en oeuvre du procédé et coûteuse en énergie.

Le document EP 1 559 744 décrit également un procédé de préparation par voie humide à pH basique d'une silice greffée par un composé organosilane, comprenant le mélange de la silice avec le composé organosilane. Ce document enseigne majoritairement une étape supplémentaire de recuit.

Les documents EP 0 928 818 et EP 0 900 829 décrivent un procédé de préparation par voie humide à pH acide d'une silice greffée par un composé organosilane, comprenant le mélange de la silice avec le composé organosilane, mais sans étape nécessaire de recuit. Cependant, ce procédé nécessite de nombreux lavages de la silice pour augmenter son pH, et le fait que le procédé ait lieu à pH acide nécessite des équipements onéreux pour résister à la corrosion.

Ainsi, un premier objectif de l'invention est de proposer un procédé de préparation de silice afin de la rendre hydrophobe, par greffage de composés organosiliciés, qui s'affranchisse des inconvénients connus de l'état de la technique mentionnés ci-dessus.

Un autre objectif de l'invention est de proposer un procédé de préparation de silice greffée par un composé organosilicié simple à mettre en oeuvre et faiblement énergivore.

Un autre objectif de l'invention est de proposer un procédé de préparation de silice greffée par un composé organosilicié, qui permette le greffage de composés organosiliciés non fonctionnalisés ou fonctionnalisés, de longueurs de chaîne variables.

Un autre objectif de l'invention est de proposer un procédé de préparation de silice greffée par un composé organosilicié, le greffage étant homogène à la surface de ladite silice.

Un autre objectif de l'invention est de proposer un procédé de préparation de silice greffée par un composé organosilicié, ladite silice étant facilement incorporable dans des compositions d'élastomère de silicone.

Ainsi un premier objet de l'invention consiste en un procédé de préparation d'une silice greffée par au moins un composé organosilicié choisi parmi le groupe constitué par :
- un cyclosiloxane,
- un composé bi-silanol de formule R₂Si(OH)₂, les groupements R, identiques ou différents, représentant un groupement alkyle en C₁-C₁₀, de préférence en C₁-C₃, avantageusement un méthyle, un groupement alcényle, de préférence vinyle, un groupement aryle, de préférence phényle,
- un polyorganosiloxane de formule (I) suivante : (R'₃SiO)(R'₂SiO)ₐ(R'₂SiOH)
   - formule dans laquelle :
      ∘ les groupements R', identiques ou différents, représentent un groupement alkyle en C₁-C-₁₀, de préférence en C₁-C₃, avantageusement un méthyle, un groupement alcényle, de préférence vinyle, un groupement aryle, de préférence phényle ou un groupement -OH,
      ∘ et le symbole a est un nombre entier compris entre 1 et 30 et de préférence entre 3 et 30,
- et leurs mélanges ;
   ledit procédé comprenant les étapes suivantes:
   a) on prépare un mélange aqueux de pH compris entre 6 et 11, de préférence entre 6,5 et 9,5 et encore plus préférentiellement de 7 environ, par ajout dans un milieu aqueux (de préférence de l'eau) d'une silice et éventuellement d'une base,
   b) on ajoute au mélange ledit composé organosilicié,
   c) le mélange est chauffé à reflux pendant une durée supérieure ou égale à 1 heure, de préférence supérieure ou égale à 20 heures, et à une température comprise entre 50°C et 100°C, de préférence comprise entre 70°C et 100°C, et
   d) la silice greffée est séparée du mélange.

Selon un mode de réalisation préféré, l'étape a) se décompose en deux étapes comme suit :
a¹) on prépare un mélange par ajout dans un milieu aqueux d'une silice, et
a²) on ajoute au mélange une base de manière que le pH du mélange soit compris entre 6 et 11, de préférence entre 6,5 et 9,5 et encore plus préférentiellement de manière que le pH du mélange soit égal à 7 environ.

Selon un mode de réalisation préféré, le procédé selon l'invention comprend une étape supplémentaire a') effectuée entre les étapes a) et b) et qui consiste à ajouter au mélange :
∘ un solvant miscible à l'eau et compatible avec ledit composé organosilicié de manière à faciliter la mise en contact entre le composé organosilicié et la silice, de préférence choisi parmi le groupe constitué par: l'éthanol, l'isopropanol, le tétrahydrofurane, la méthyléthylcétone, et leurs mélanges, et/ou
∘ un sel, de préférence choisi dans le groupe constitué par les sels de sodium, de potassium, d'ammonium, de pyridinium et leurs mélanges.

Ce solvant peut être choisi dans le groupe constitué par l'éthanol, l'isopropanol, le tétrahydrofurane, la méthyléthylcétone, et leurs mélanges. Dans un mode de réalisation préféré, le solvant miscible à l'eau est l'isopropanol.

Selon l'invention, le solvant miscible à l'eau peut être utilisé en une quantité en poids allant de 10 à 50 %, de préférence de 20 à 40 %, par rapport au poids de milieu aqueux, silice et composé organosilane.

Selon l'invention, le pourcentage poids du ratio sel/silice est compris entre 0,1 et 10%, de préférence entre 0,5 et 5%.

Selon un autre mode de réalisation préféré, le procédé selon l'invention comprend une étape supplémentaire c') effectuée entre les étapes c) et d) et qui consiste à ajouter au mélange un solvant non miscible à l'eau. Son ajout permet notamment le transfert en son sein de la silice hydrophobe produite, avant filtration.

Ce solvant non miscible à l'eau peut être choisi parmi des silicones de faible poids moléculaire tels que l'hexaméthyldisiloxane, l'octaméthylcyclotétrasiloxane, le diphényltétraméhyldisiloxane ou des huiles silicones terminées par des groupements triméthyles. De plus d'autres solvant immiscibles à l'eau peuvent être utilisés, comme les solvants aromatiques tels que le toluène et le xylène, l'heptane ou tout autres hydrocarbures saturés, linéaires, ramifiés ou cycliques, les éthers, comme le diéthyléther, les halogénoalcanes comme le chloroforme ou des cétones comme la méthylisobutylcétone.

En variante, le procédé de l'invention comprend l'enchaînement des étapes a), de préférence a¹) et a²), puis a'), b), c), c'), et d).

Dans un mode de réalisation préféré de l'invention, on effectue après l'étape d) les étapes suivantes :
e) on sèche la silice greffée issue de l'étape d), et
f) on broie la silice greffée.

De manière préférée, le procédé comprend l'enchaînement des étapes a), de préférence a¹) et a²), puis a'), b), c), c'), d), e) et f).

Selon l'invention, la silice peut être une silice pyrogénée ou une silice précipitée. De manière avantageuse, la silice est une silice pyrogénée. Lorsqu'une telle silice est employée, l'emploi d'une base pour ajuster le pH à l'étape a) est préférable. De manière préférée, cette étape a) se décompose en les étapes a¹) et a²) précitées.

De manière avantageuse, la silice a une surface spécifique BET à 25°C comprise entre 40 et 400 m²/g. La surface spécifique peut être mesurée par la méthode de Brunauer-Emmet-Teller décrite dans Journal of American Chemical Society vol 60, p.309, février 1938.

Comme exemple de silice pyrogénée, on peut choisir le produit commercialisé sous la référence Aerosil© A200 par la société Evonik.

Selon l'invention, le composé organosilicié peut être choisi parmi les cyclosiloxanes fonctionnalisés ou non fonctionnalisés, et leurs mélanges.

Dans un mode de réalisation de l'invention, le cyclosiloxane est avantageusement choisi parmi les cyclosiloxanes comportant de 3 à 7 atomes de silicium, de préférence est un cyclotétrasiloxane.

Suivant un mode de réalisation avantageux de l'invention, le cyclosiloxane a la formule (II) suivante : 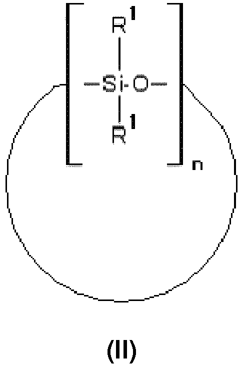 avec :
- n = 3, 4, 5, 6, 7 ou 8 ; et :
   - lorsque le cyclosiloxane est un cyclosiloxane non fonctionnalisé, les symboles R¹, identiques ou différents, représentent un radical alkyle en C₁-C₁₂, linéaire ou ramifié, éventuellement substitué, un radical cycloalkyle en C₅-C₁₀, éventuellement substitué, un radical aryle en C₆-C₁₈ éventuellement substitué ou un radical aralkyle, éventuellement substitué, et
   - lorsque le cyclosiloxane est un cyclosiloxane fonctionnalisé, au moins l'un des symboles R¹ représente un radical alcényle, de préférence en C₂-C₄ et encore plus préférentiellement un radical vinyle.

Dans un mode de réalisation préféré, le cyclosiloxane est l'octaméthylcyclotétrasiloxane ou le tétraméthyltétravinylcyclotétrasiloxane, ou encore un mélange des deux.

Dans un mode de réalisation préféré, on met en oeuvre un mélange de composés organosiliciés, qui comprend :
- au moins un cyclosiloxane non fonctionnalisé de formule (II) tel que définie ci-dessus, et
- au moins un cyclosiloxane fonctionnalisé de formule (II) telle que définie ci-dessus.

Selon l'invention, la teneur en poids du cyclosiloxane fonctionnalisé, notamment vinylé dans le mélange cyclosiloxane non fonctionnalisé et cyclosiloxane fonctionnalisé peut varier dans de larges proportions. De manière avantageuse, cette teneur peut varier entre 0,01 et 50%, notamment entre 0,1 et 20%, mieux entre 0,1 et 12%, mieux encore entre 0,2 et 6%, de préférence entre 0,25 et 3 %.

Dans un mode de réalisation, le composé organosilicié est choisi parmi les composés bi-silanols de formule R₂Si(OH)₂, les groupements R, identiques ou différents, représentant un groupement alkyle en C₁-C₁₀.

Dans un mode de réalisation, les groupements R représentent un groupement alkyle en C₁-C₃, avantageusement un méthyle.

Dans un mode de réalisation, les groupements R représentent un groupement alcényle, de préférence vinyle, ou un groupement aryle, de préférence phényle.

Dans un autre mode de réalisation, le bi-silanol comprend :
- un groupement R représentant un groupement alkyle en C₁-C₃, avantageusement un méthyle, et
- un groupement R représentant un groupement alcényle, de préférence vinyle, ou un groupement aryle, de préférence phényle.

Par exemple, l'invention met en oeuvre un bi-silanol dans lequel les deux groupements R sont des méthyle ou des vinyles, ou encore un bi-silanol comprenant un vinyle et un méthyle.

Dans un mode de réalisation, le composé organosilicié est choisi parmi les composés de formule (R'₃SiO)(R'₂SiO)ₐ(R'₂SiOH), les groupement R', identiques ou différents, représentant un groupement alkyle en C₁-C₁₀, a étant compris entre 1 et 30, de préférence entre 3 et 30.

Dans un mode de réalisation, les groupements R' représentent avantageusement un groupement alkyle en C₁-C₃, de préférence un méthyle.

Dans un mode de réalisation, les groupements R' représentent un groupement alcényle, de préférence vinyle, un groupement aryle, de préférence phényle ou un groupement -OH.

Dans un autre mode de réalisation, le composé de formule (R'₃SiO)(R'₂SiO)ₐ(R'₂SiOH) comporte :
- au moins un groupement R' représentant un groupement alkyle en C₁-C₃, de préférence un méthyle, et
- au moins un groupement R' représentant un groupement alcényle, de préférence vinyle, un groupement aryle, de préférence phényle ou un groupement -OH.

Dans un mode de réalisation avantageux, ce composé comprend :
- au moins un groupement vinyle,
- le reste des groupements R' étant des groupements méthyle.

Dans un mode de réalisation, un sel est ajouté au mélange de l'étape a), de préférence au mélange de l'étape a¹). Ce sel est avantageusement choisi dans le groupe constitué par les sels de sodium, de potassium, d'ammonium, de Bis(triphénylphosphoranylidène)ammonium, de phosphonium, les cryptants (e.g. Kryptofix®222, n°CAS 23978-09-8) et leurs mélanges. Selon l'invention, le sel un chlorure, et est avantageusement le NaCl.

Dans un mode de réalisation, la concentration molaire de sel dans le mélange est comprise entre 0,01 et 10 mol/L, de préférence entre 0,1 et 1 mol/L.

Un autre objet de l'invention est une silice greffée par au moins un composé organosilicié choisi parmi le groupe constitué par :
- un cyclosiloxane,
- un composé bi-silanol de formule R₂Si(OH)₂, les groupements R, identiques ou différents, représentant un groupement alkyle en C1-C10, de préférence en C1-C3, avantageusement un méthyle, un groupement alcényle, de préférence vinyle, un groupement aryle, de préférence phényle,
- un polyorganosiloxane de formule (I) suivante :

   (R'₃SiO)(R'₂SiO)ₐ(R'₂SiOH)

   formule dans laquelle :
   les groupements R', identiques ou différents, représentent un groupement alkyle en C1-C10, de préférence en C1-C3, avantageusement un méthyle, un groupement alcényle, de préférence vinyle, un groupement aryle, de préférence phényle ou un groupement -OH,
   et le symbole a est un nombre entier compris entre 1 et 30 et de préférence entre 3 et 30,
      - et leurs mélanges ;
      obtenue ou susceptible d'être obtenue par le procédé selon l'invention.

Un autre objet de l'invention est une silice greffée par au moins un composé organosilicié, caractérisée par la présence en surface de fonctions Si-O-G avec G étant un greffon siloxane comprenant :
i) au moins deux motifs siloxyl D de formule (R¹)₂SiO_{2/2},
ii) et un motif siloxyl terminal D^{OH} de formule (R¹)₂(OH)SiO_{1/2}, formules dans lesquelles les symboles R¹, identiques ou différents, représentent un radical alkyle en C₁-C₁₂, linéaire ou ramifié, éventuellement substitué, un radical cycloalkyle en C₅-C₁₀, éventuellement substitué, un radical aryle en C₆-C₁₈ éventuellement substitué, un radical aralkyle, éventuellement substitué ou un radical alcényle, de préférence en C₂-C₄.

Dans un mode de réalisation, le greffon siloxane G comprend entre 2 et 31 motifs siloxyl D et au moins un motif siloxyl terminal D^{OH}.

L'invention a notamment pour objet une silice greffée par au moins un composé organosilicié, caractérisée par la présence en surface de fonctions Si-O-G avec G étant un greffon siloxane comprenant :
i) 3 motifs siloxyl D de formule (CH₃)₂SiO_{2/2} et 1 motif siloxyl terminal D^{OH} de formule (CH₃)₂(OH)SiO_{1/2}, ou
ii) 3 motifs siloxyl D^{Vi} de formule (CH₃)(CH₂=CH₂-)SiO_{2/2} et 1 motif siloxyl terminal D^{OH} de formule (CH₃)₂(OH)SiO_{1/2}.

Dans un mode de réalisation, la silice porte en surface des fonctions Si-O-G des deux catégories i) et ii).

L'invention a aussi pour objet une silice greffée susceptible d'être obtenue par le procédé de l'invention, notamment l'une des silices qui viennent d'être décrites, et qui est caractérisée par :
i) analyse thermo-gravimétrique (ATG) avec une élévation de température de 50°C par minute et mesurée entre 200°C et 450°C, d'une perte de masse supérieure ou égale à 0,55%, de préférence comprise entre 0,55 et 3%,
ii) analyse thermo-gravimétrique (ATG) avec une élévation de température de 50°C par minute et mesurée à une température supérieure à 450°C, d'une perte de masse réalisée supérieure à 1,1 %, et
iii) la présence d'un pic entre -5 et -15 ppm dans un spectre obtenu par résonance magnétique nucléaire de l'élément chimique ²⁹Si à l'état solide.

Les spectres de RMN du solide du ²⁹Si ont été obtenus sur un spectromètre 400 MHz de type wide-bore. La fréquence de ²⁹Si est alors de 79,49 MHz. Les échantillons ont été conditionnés dans des rotors en Zr0₂ de 7,5 mm de diamètre externe. La vitesse de rotation à l'angle magique est de 5000 Hz. La séquence majoritairement utilisée est une séquence simple impulsion avec découplage proton (notée OP).

L'observation directe du silicium (simple impulsion, nommée mode OP-MAS) permet une mesure globale des espèces siliciées présentes à la surface de la silice (greffées chimiquement et/ou physisorbées). Les paramètres d'acquisitions utilisés sont : impulsion Pi/6 d'une durée de 1 µs, délai de relaxation D1 = 60 s. La durée totale de l'expérience varie de 6 h à 24 h.

Les analyses thermogravimétriques (ATG) sont réalisées avec une rampe de température de 50°C par minutes sous azote.

La vocation de la silice greffée selon l'invention est d'être en outre utilisée dans la préparation de compositions silicones liquides ou pâteuses réticulables, de préférence par polyaddition ou polycondensation, en élastomère silicone dans l'atmosphère ambiante à température normale ou à température plus élevée, ou de compositions silicones liquides ou pâteuses non réactives (anti-mousse).

L'invention a donc aussi pour objet une composition de silicone réticulable en élastomère comprenant au moins une silice greffée selon l'invention.

De manière avantageuse, la teneur en poids de silice greffée par rapport au poids total de la composition est comprise entre 0,1 et 80% en poids, de préférence entre 1 et 50% en poids.

Dans un mode de réalisation, la silice greffée selon l'invention est mis en oeuvre dans un procédé d'obtention d'une composition silicone réticulable par polyaddition, caractérisé en ce qu'il consiste à mélanger les produits suivants :
- une silice greffée selon l'invention
- un ou plusieurs polyorganosiloxanes (POS) (I)
- un ou plusieurs POS (II),
- éventuellement un ou plusieurs POS (III), utile(s) comme diluant(s)
- un système catalytique comprenant un catalyseur, de préférence de nature platinique, et éventuellement un inhibiteur ou ralentisseur.

Les POS (I) peuvent notamment être choisis parmi les huiles polydiorganosiloxane porteuses de Si-alcényle en particulier de Si-vinyle dans et/ou aux extrémités de la chaîne. On peut citer par exemple le polydialkyle (méthyle) siloxane, α,ω- divinylé. De manière avantageuse, le POS (I) est un POS (I) vinylé porteur d'au moins deux motifs Si-vinyle par molécule, de préférence au moins trois par molécule, quand le POS (II) ne comporte que deux motifs SiH par molécule.

Le POS (II) peut notamment être choisi parmi les polyorganohydrogéno-siloxanes comprenant au moins deux motifs ≡SiH par molécule, de préférence au moins trois quand le POS (I) ne comprend que deux motifs ≡Si-vinyle par molécule. On citera par exemple le polyalkyl(méthyl)hydrogénosiloxane ou bien encore des POS hydrogénés ramifiés comportant des motifs tri ou tétrafonctionnels et des motifs ≡SiH.

Le POS (III) peut être un polydiorganosiloxane, tel qu'un polyalkyl de préférence polydiméthylsiloxane à extrémités triméthylsilyles.

Le catalyseur de nature platinique peut notamment consister en un complexe du platine tel que celui préparé à partir de l'acide chloroplatinique et de divinyl-1,3-tétraméthyle-1-1-3-3-disiloxane, selon le brevet US 3 814 730 (catalyseur de Karstedt). D'autres complexes du platine sont décrits dans les brevets US 3 159 601, 3 159 662 et 3 220 972.

Les inhibiteurs peuvent être choisis parmi
- les polyorganosiloxanes, avantageusement cycliques, substitués par au moins un alcényle, le tétraméthylvinyltétrasiloxane étant particulièrement préféré,
- la pyridine,
- les phosphines et les phosphites organiques,
- les amides insaturés,
- les maléates alkylés,
- et les alcools acétyléniques, comme ceux décrits dans les documents FR 1528464 et FR 2372 74.

Selon une première variante du procédé tel que défini supra :
- on produit la composition, sous forme de système bi-composants C₁ et C₂ destinés à mettre mis en contact l'un à l'autre pour produire un élastomère réticulé par polyaddition entre les POS (I) et (II),
- et on fait en sorte que l'une seulement des parties C₁ ou C₂ contienne du catalyseur et éventuellement l'un ou l'autre des POS (I) et (II).

Suivant une deuxième variante de ce procédé de préparation de compositions liquides, réticulables, on réalise un système monocomposant destiné à réticuler à l'air ambiant et/ou sous l'effet de la température.

De manière avantageuse, la réticulation est réalisée à une température supérieure ou égale à 150°C, de préférence comprise entre 150°C et 200°C.

Ces compositions réticulables précurseurs d'élastomères, peuvent également comprendre un ou plusieurs additifs fonctionnels, tels que par exemple une charge non renforçante formée par de la craie, de la poudre de quartz, de la terre de diatomées, du mica, du kaolin, des alumines ou des oxydes de fer.

Les additifs peuvent être également choisis parmi des pigments, des agents antiadhésifs, des plastifiants ou des modificateurs de rhéologie, des stabilisants ou des promoteurs d'adhérence.

Les mélanges intervenant dans ces procédés peuvent être réalisés à l'aide de dispositifs connus et appropriés, notamment des mélangeurs conventionnels utilisés habituellement pour ces préparations, tels que :
- mélangeurs à bras,
- mélangeurs internes,
- mélangeurs planétaires,
- mélangeurs à pales en soc de charrue,
- mélangeurs à double arbre co ou contra rotatif,
- mélangeurs extrudeurs continus,
- ou mélangeurs bicylindres.

Les mélanges intervenant dans ces procédés peuvent également être réalisés par d'autres dispositifs discontinus ou continus, tels que réacteurs agités ou mélangeurs statiques.

Un autre objet de la présente demande concerne un élastomère de silicone obtenu par réticulation d'une composition de silicone réticulable en élastomère selon l'invention.

Un autre objet de la présente demande concerne un article à base d'un élastomère de silicone selon l'invention.

Selon l'invention, l'article trouve son application dans divers domaines, tels que des contacts pour calculateurs électroniques et touches de téléphones, de claviers d'ordinateurs...

Un autre objet de la présente demande concerne une composition de dentifrice comprenant une silice greffée selon l'invention.

Un autre objet de la présente demande concerne une composition anti-mousse comprenant une silice greffée selon l'invention. La teneur en silice greffée dans la composition anti-mousse peut être comprise entre 1 et 10% massique, de préférence entre 3 et 7 % massique.

La présente invention sera mieux comprise à la lecture des exemples qui suivent. Ces exemples sont donnés à titre indicatif, sans caractère limitatif.

### Exemple 1 : production de silice greffée par un cyclotétrasiloxane non fonctionnalisé selon l'invention

Le procédé cité ci-dessous a été réalisé dans un réacteur de 3 L avec une agitation à deux hélices et une contre pâle.

800 g d'eau déminéralisée ont tout d'abord été introduits dans un réacteur de 3L. Sous une agitation de 400 tr/min. 120 g de silice pyrogénée Aerosil© A200 ont ensuite été dispersés dans l'eau.

400,9 g d'eau déminéralisée supplémentaires ont été ensuite ajoutés suivi de 0,9197 g de sel NaCl. L'agitation a été réduite à 200 tr/min puis laissée toute la nuit.

6 mL d'une solution de soude à environ 1 mol/L ont été ajoutés afin d'atteindre un pH proche de la neutralité. Bien que la dispersion ne soit pas totalement fluide puisqu'elle forme un gel, le pH de ce gel a été mesuré à une valeur d'environ 7,2.

399,2 g d'isopropanol (IPA), suivi de 270,4 g d'octaméthylcyclotétrasiloxane (D₄) ont ensuite été ajoutés. Sous agitation à 600tr/min, le milieu a été chauffé à reflux à 80°C pendant 24h. Une cinétique a été réalisée et a permis de voir que le greffage s'effectue bien de manière covalente et progressive, puisque l'on voit que l'intégration des pics des silanols diminue au profit d'une augmentation d'intensité du pic des motifs D (de formule (R¹)₂SiO_{2/2}) du greffage.

L'ensemble du réacteur a ensuite été vidé dans un bidon. Le réacteur a été ensuite lavé avec 2L d'eau, 200 mL d'IPA et 500 mL d'heptane. La silice a été ensuite récupérée par filtration avec une pression de 2 bars et un filtre carton (diamètre des pores : 20 µm). La silice a ensuite été séchée à l'air sous la hotte, puis 4 h à 50°C sous vide, puis une nuit à 60°C sous vide suivi de 5 h à 90°C sous vide. La silice séchée a été ensuite placée dans un bidon, et les agglomérats de silice cassés par action mécanique.

### Exemple 2 : production de silice greffée par un cyclotétrasiloxane non fonctionnalisé selon l'invention (Ex-2)

Un procédé similaire à celui présenté dans l'exemple 1 a été réalisé avec 170 g de silice pyrogénée Aerosil© A200, 1700 g d'eau déminéralisée, 1,3029 g de NaCl et 202 g d'IPA. De la soude a été ensuite ajoutée pour atteindre un pH de 7,3.

362,2 g d'IPA ont ensuite été ajoutés suivi de 383,01 g de D₄. Après 24 h à 80 °C, la silice a été filtrée sous une pression de 2 bars et un filtre carton (diamètre des pores : 20 µm). La silice restant dans le réacteur a été récupérée à l'aide d'un mélange biphasique eau/heptane. Seule la phase heptane a été récupérée puis filtrée afin de récupérer toute la silice.

La silice filtrée a ensuite été mise à sécher à l'étuve sous vide pendant 48 h à 90°C. La silice séchée a été ensuite placée dans un bidon, et les agglomérats de silice cassés par action mécanique.

### Exemple 3 : production de silice greffée par un cyclotétrasiloxane non fonctionnalisé selon l'invention (Ex-3)

Le même protocole que suivi pour l'exemple 1 a été utilisé. La seule différence a résidé dans le temps de chauffage qui a été réduit de moitié, à savoir 12 h de reflux à 80 °C au lieu de 24 h.

### Exemple 4 : production de silice greffée par un cyclotétrasiloxane non fonctionnalisé selon l'invention (Ex-4)

Le procédé a été mis en oeuvre en l'absence de sel et d'isopropanol, dans un réacteur de 3 L avec une agitation à deux hélices et une contre pâle.

Ainsi, 170,4 g de silice pyrogénée Aerosil© A200 ont été dispersés dans 1700 g d'eau déminéralisée. 4,6 mL d'une solution de soude concentrée ont été ajoutés afin que la dispersion de silice atteigne un pH de 6,99. 1218,7 g de D₄ ont été ensuite ajoutés puis le mélange a été chauffé à 80°C pendant 24 h.

Après 24 h à 80°C, une partie de la silice a été récupérée par filtration sous vide à l'aide d'un fritté n°4 ; l'autre partie à l'évaporateur rotatif avec un vide de 5 mbar, et une montée progressive en température (de 60°C à 120°C). La silice récupérée par filtration et celle séchée à l'évaporateur rotatif ont été ensuite placées 24 h à l'étuve à 90°C sous vide. La silice séchée a ensuite été placée dans un bidon, et les agglomérats de silice cassés par action mécanique.

### Exemple 5 : production de silice greffée par un cyclotétrasiloxane non fonctionnalisé selon l'invention (Ex-5)

Le procédé a été mis en oeuvre sans IPA, mais avec un cation encombré (bromure de tetrabutyle ammonium ou TBABr) et une importante quantité de D₄, qui joue à la fois le rôle de solvant et de réactif.

24 g de silice ont tout d'abord été dispersés dans 600 g d'eau dans un réacteur d'1 litre, le pH est alors de 3,54. 0,6769 g de TBABr (soit une concentration de 4.10⁻³ mol/L) ont ensuite été ajouté puis le pH amené à 7 par ajout de soude à 1 mol/L (environ 1 mL) et environ 1 mL de soude à 0,1 mol/L

Une fois le pH de la dispersion neutralisé, 200 g de D₄ on été ensuite ajoutés dans le réacteur. Le mélange a été ensuite chauffé à reflux à 100°C pendant 24 h. La silice hydrophobe a été ensuite récupérée par un ajout d'environ 120 mL d'heptane. La silice a été ensuite lavée par 3 cycles de centrifugation/redispersion dans l'heptane puis mise à sécher sous air pendant 15 h puis 24 h dans une étuve à 90°C sous vide.

### Exemple comparatif 1 : production de silice greffée par un cyclotétrasiloxane non fonctionnalisé en milieu acide concentré (C-Ex 1)

180 g de silice pyrogénée Aerosil© A200 ont été dispersés dans 820 g d'eau, 180,1 g d'HCl concentré et 334 g d'IPA. 25,1 g de D₄ ont été ensuite ajoutés puis l'ensemble chauffé à 85°C pendant 30 min, puis refroidit à température ambiante (20°C).

Selon ces conditions expérimentales, la dispersion de silice a été très mal agitée, puisque le milieu était totalement figé alors que la température de la dispersion n'était que de 50 °C.

347,1 g d'héxaméthyldisiloxane (M₂) ont été ensuite ajoutés pour fluidiser le milieu. Afin de faciliter le transfert de phase, environ 300 mL d'heptane a également été ajouté. La phase aqueuse acide a été ensuite retirée, puis 1,5 L d'eau ont été ajoutés puis laissés agités en présence de la silice dispersée dans le M₂ pendant 30 min.

1,5 L d'eau et 1,5 g de NaHCO₃ ont été ajoutés pour laver la silice, ce qui ne suffit par pour neutraliser la silice, puisque cette eau de lavage a, après évacuation, un pH compris entre 1 et 2. 1,5 L d'eau ont été ensuite ajoutés, mais à ce moment là, une agitation trop vive a entrainé l'émulsification du milieu, rendant impossible la séparation des phases organiques et aqueuses par simple décantation.

L'ensemble de la silice a donc été récupérée par filtration sous vide à l'aide d'un fritté n°4. La silice a ensuite été séchée à l'étuve à 90°C sous vide. La silice séchée a été ensuite placée dans un bidon, et les agglomérats de silice cassés par action mécanique.

### Exemple comparatif 2: production de silice greffée par un cyclotétrasiloxane non fonctionnalisé en milieu acide concentré (C-Ex 2)

180,7 g de silice pyrogénée Aerosil© A200 ont été dispersés dans 800,1 g d'eau déminéralisée, 180 g d'HCl concentré et 333 g d'IPA. 130,1 g de D₄ ont été ensuite ajoutés puis l'ensemble a été chauffé à 85°C pendant 30 min, puis refroidit à température ambiante. Selon ces conditions expérimentales, la dispersion de silice a été très mal agitée, puisque le milieu était totalement figé alors que la température de la dispersion n'était que de 45 °C.

Sous faible agitation (200 tr/min), 426 g de M₂ ont été ajoutés. Après 1 heure d'agitation, on a constaté qu'il y a 3 phases dans le milieu (en plus de gros blocs de silice collés à la paroi), de la silice qui a décanté au fond du réacteur et de la silice qui se situait au niveau de la phase M₂. Après 13 h d'agitation, la silice qui a décanté n'était toujours pas passée en phase organique, il a été alors ajouté 200 g de M₂ supplémentaire ce qui a permis un changement de phase plus important. La phase aqueuse acide a été ensuite vidée (pH ≤ 1 par papier pH).

1,5 L d'eau et 1,5 g de NaHCO₃ ont été ajoutés pour laver la silice, ce qui n'a pas suffi pour neutraliser la silice, puisque cette eau de lavage avait, après évacuation, un pH compris entre 1 et 2. Afin de garder la silice dispersée dans la phase M₂, a été ajouté 500 g de M₂ supplémentaire puis 3 fois 1,5 L d'eau ont été ajoutés pour laver la silice. Après agitation, le pH de l'eau du dernier lavage était de 2,1 (mesure au pH-mètre).

Un nouveau lavage contenant 1,5 L d'eau et 30 g de NaHCO₃ a été ensuite appliqué, ce qui a rendu le milieu basique (et non neutre). 4 lavages supplémentaires avec à chaque fois 1 L d'eau ont été réalisés pour se rapprocher de la neutralité.

La silice étant difficile à filtrer, le M₂ a été évaporé sous air (pendant 48 h) puis la silice a été séchée dans une étuve ventilée à 130°C pendant 24 h.

Le Tableau I ci-dessous présente les résultats de la caractérisation de chacune des silices obtenues dans les exemples 2 à 5 et les exemples comparatifs 1 et 2, ainsi que de deux silices industrielles : une silice Aerosil© A200 brute (C-Ex 3) et une silice traitée par vaporisation de D₄ à haute température (C-Ex 4).

**Tableau I**

| | | | | | RMN solide (OP-MAS) | | |
|---|---|---|---|---|---|---|---|
| Perte de masse (ATG) (% massique) | | | | Ethoxylation | Densité de Silanol de surface restants (par nm²) | % de D^{OH} ** dans le greffage | % de D "mobiles" dans le greffage |
| Silice | < 200°C | entre 200 et 450°C | > 450°C | % D* en surface | pics entre -85 et-105 ppm | pic entre -5 et - 13 ppm | pic fin vers -22 ppm |
| Ex-2 | 0,4 | 0,9 | 1,9 | 7,5 | 2,50 | 10 - 20% | 0 |
| Ex-3 | 0,7 | 0,6 | 1,4 | 5,2 | 2,60 | 10 - 20% | 0 |
| Ex-4 | 0,3 | 0,6 | 1,2 | 6,4 | 2,75 | 10 - 20% | 0 |
| Ex-5 | 1,6 | 2,5 | 20,0 | 25 | 2,20 | 10 - 20 % | 5 |
| C-Ex 1 | 0,4 | 1,2 | 2,9 | 9,2 | 3,60 | 0 - 5 % | 15 |
| C-Ex 2 | 1,0 | 8,1 | 6,3 | 18,1 | 3,00 | 0 - 5 % | 45 |
| C-Ex 3 | 1,0 | 0,5 | 0,7 | 0,2 | 4,00 | 0 | 0 |
| C-Ex 4 | 1,0 | 0,2 | 1,0 | 6 | 2,65 | 0 | 0 |

| | | | | | | | |
|---|---|---|---|---|---|---|---|
| C-Ex 3 : silice Aerosil© A200 : silice brute, non greffée, commercialisée par Evonik ; C-Ex 4 : silice greffée par vaporisation d'octaméthylcyclotétrasiloxane à haute température ; * %D : pourcentage massique de motifs siloxyls D de formule (CH₃)₂SiO_{2/2} ; ** D^{OH} : motifs siloxyls de formule (CH₃)₂(OH)SiO_{1/2} ; | | | | | | | |

Les analyses thermogravimétriques (ATG) ont été réalisées sur un appareil TA Instrument Q50, sous atmosphère d'azote (100 mL/min) avec une rampe de température de 50°C par minute, de la température ambiante (20°C) à 900 °C. Avant 200 °C, la perte de masse correspond à de l'eau ou à d'autres espèces (comme par exemple l'IPA ou le D₄) physisorbées. Entre 200 et 450 °C, la perte de masse correspond majoritairement à des composés organosilanes linéaires physisorbés et non greffés chimiquement. Un composé organosilane linéaire greffé chimiquement se dégrade au-delà de 450°C alors que s'il est juste adsorbé, sa température de dégradation est plus faible.

L'éthoxylation permet de quantifier exactement le greffage en s'affranchissant des effets de proximité des composés greffés avec la surface observés en ATG. Cette technique consiste à « digérer » le greffage dans une solution de tétraéthylorthosilicate (TEOS) et de potasse (KOH), c'est-à-dire à casser chacun des motifs D greffés chimiquement ou adsorbés à la surface et à les quantifier ensuite par chromatographie gazeuse « head space ». Les résultats obtenus sont exprimés en pourcentage massique de greffage.

Les spectres de RMN du solide du ²⁹Si ont été obtenus sur un spectromètre 400 MHz de type wide-bore. La fréquence de ²⁹Si est alors de 79,49 MHz. Les échantillons ont été conditionnés dans des rotors en Zr0₂ de 7,5 mm de diamètre externe. La vitesse de rotation à l'angle magique était de 5000 Hz. La séquence majoritairement utilisée est une séquence simple impulsion avec découplage proton (notée OP).

L'observation directe du silicium (simple impulsion, nommée mode OP-MAS) a permis une quantification globale des espèces siliciées présentes à la surface de la silice (greffées chimiquement et/ou physisorbées).
Les signaux provenant des atomes de silicium de la silice apparaissent à des déplacements chimiques compris entre -85 et -120 ppm. Il est communément admis que le signal centré aux alentours d'un déplacement chimique de -92 ppm est attribué aux silanols géminés (Q²), que le signal centré aux alentours d'un déplacement chimique de -101,5 ppm est attribué aux silanols seuls (Q³) (terminaux, vicinaux et isolés) et que le signal centré aux alentours d'un déplacement chimique de -110 ppm est attribué aux ponts siloxanes (Si-O-Si) (Q⁴) de surface et de coeur. Pour quantifier les silanols présents à la surface de la silice après greffage, le formalisme suivant a été adopté.

D'après une étude circonstanciée publiée par Zhuravlev (Zhuravlev, L. T., The surface chemistry of amorphous silica. Zhuravlev model. Colloids and Surfaces A: Physicochemical and Engineering Aspects 2000, 173, (1-3), 1-38), une silice complètement hydroxylée possède une densité de silanols de surface de 4,6 par nm². Il a été considéré qu'une silice pyrogénée A200 hydroxylée pendant 72 h en présence d'acide chlorhydrique à 60 °C était complétement hydrolysée et comportait donc 4,6 silanols par nm². L'analyse par RMN du silicium avec la séquence OP-MAS et la déconvolution des pics à -92, -101,5 et -110 ppm des atomes de silicium Q², Q³ et Q⁴ a permis de calculer le pourcentage du signal RMN qui correspond à 4,6 silanols par nm². L'analyse selon cette même méthode des silices traitées a permis, en comparant les pourcentages du signal RMN, de quantifier les silanols restants à la surface de la silice.

Les signaux provenant des atomes de silicium du greffage des motifs D apparaissent à des déplacements chimiques compris entre -5 et -25 ppm et des motifs D vinylés entre -20 et -40 ppm. Dans la zone comprise entre -5 et -25 ppm, différentes espèces peuvent être différenciées :
- celles dont le maximum du pic se situe entre -5 et -13 ppm correspondent à des motifs D comportant une fonction OH (D^{OH}),
- celles dont le maximum du pic se situe entre -13 et -20 ppm correspondent à des motifs D proches du point d'ancrage de la surface de la silice (plus le déplacement chimique augmente en valeur absolue, moins le motifs D est en intéraction avec la surface),
- et les espèces caractérisées par un pic fin vers -22 à -22,5 ppm correspondent à des groupements D (D^{P}) sans aucune interaction avec la surface (donc à des motifs D d'une chaîne silicone éloignée du point de greffage ou à des motifs D d'une chaîne silicone physisorbée).
Les paramètres d'acquisition utilisés étaient : impulsion Pi/6 d'une durée de 1 µs, délai de relaxation D1 = 60 s. La durée totale de l'expérience a varié de 6 h à 24 h. Les silices Ex-2 et Ex-3 présentent de faibles pertes de masse avant 200°C, ainsi qu'entre 200 et 450°C. Ceci indique qu'il n'y a pas ou peu d'espèces adsorbées à la surface de la silice. Le pourcentage massique de greffage déterminé par éthoxylation se situe entre 5 et 8 % massique. Ce résultat est bien supérieur aux pertes de masses observées par ATG, ce qui indique que le greffage est en forte interaction avec la surface et que la dégradation thermique est incomplète.
Les spectres RMN des silices Ex-2 et Ex-3 indiquent qu'une majorité de silanols de surface ont réagi (il y a une forte diminution de l'intensité des signaux RMN situés vers -90 et -100 ppm). Les spectres RMN présentant également des signaux importants centrés aux alentours de -10 ppm (l'aire de ce pic représente environ 20 % de l'aire totale assimilable au greffage), ce qui indique qu'il y a une forte concentration de groupements D^{OH}. De plus, on n'observe pas de pic fin et intense vers -22 ppm. Les signaux de ces groupements D apparaissent principalement entre -13 et -21 ppm ; ceci corroborant que ces motifs D sont « proches » de la surface de la silice.

Les résultats de l'exemple 4 (Ex 4) montrent que le greffage a lieu, malgré l'absence de sel, démontrant ainsi que la présence d'un sel est optionnelle pour que le greffage soit effectif. Les pertes de masse et le profil du spectre RMN montrent que le greffage est similaire à celui des exemples 2 et 3.

Les résultats de l'exemple 5 (Ex-5) montrent l'influence de l'ajout d'un cation, notamment un cation encombré tel que le TBABr, sur la quantité de composé organosilane greffé (25 % massique de groupements D par éthoxylation). Seulement 5 % de ce greffage apparaît sous forme de pic fin vers -22 ppm. Il y a donc une faible proportion de groupements D « mobiles ». Etant donné que le taux de silanols de surface est voisin de ceux obtenus avec les silices Ex 2 à Ex 4 et que le taux de greffage est entre 3 et 4 fois supérieur, les composés organosilanes linéaires greffés chimiquement sont de masse molaire plus élevée qu'à la surface des silices Ex 2 à Ex 4. Le sel utilisé permet ainsi de faire varier la longueur des chaînes greffées.
La présence d'un cation encombré (Ex-5) permet également d'accélérer considérablement la cinétique de greffage. En moins de 5 h, le greffage obtenu est similaire à celui de la silice Ex-2 (mêmes profils de spectre RMN du silicium et même % massique de groupements D).

La silice C-Ex 3 est une silice Aerosil© A200 brute, non modifiée. La perte de masse avant 200°C correspond à de l'eau physisorbée. Les pertes de masse supérieures sont attribuées à l'eau créée par condensation des silanols de surface. Le spectre RMN ne montre, comme attendu, aucun pic dans la zone des motifs D (entre -5 et -25 ppm), et une intensité des pics correspondant aux silanols supérieure à celle des silices greffées.

La silice C-Ex 4 est une silice modifiée avec du D₄ greffé à haute température. L'analyse par RMN du solide ²⁹Si OP-MAS ne présente aucun signal entre -5 et - 13 ppm, ce qui indique qu'il n'y a pas ou très peu de groupements D^{OH}. Les analyses du greffage par éthoxylation donnent un greffage d'environ 7 % de motifs D à la surface, alors que par ATG, la perte de masse est de 1 % avant 200°C et de 1 % au-delà de 450°C. Parmi les 7 % de greffage, il y a donc 1 % de cycles adsorbés, et 6 % de motifs D greffés chimiquement. Cette grande différence entre les résultats obtenus par éthoxylation et par ATG indique donc que le greffage est en forte interaction avec la surface de la silice pour la silice C-Ex 4.

La silice greffée C-Ex 1 présente 1,2 % de perte de masse entre 200 et 450°C, ce qui est légèrement supérieur à celle obtenue avec la silice Ex 2 selon l'invention, la perte de masse étant encore plus importante avec la silice C-Ex 2. Ces résultats montrent la présence significative, notamment pour la silice C-Ex 2, de composés comprenant des motifs D adsorbés et non greffés à la surface de la silice.

Les spectres RMN des silices C-Ex 1 et C-Ex 2 indiquent qu'il reste encore une majorité de silanols à la surface de la silice qui n'ont pas réagi. Etant donné que le taux de greffage est important (environ 9 et 18 % pour les silices C-Ex 1 et C-Ex 2 respectivement) et qu'il y a moins de silanols de surface qui ont réagi par rapport aux silices Ex-2 à Ex-5, les chaînes silicones comprenant des motifs D présents à la surface de la silice sont donc soit plus longues (masse molaire plus forte), soit adsorbées, soit les 2. En s'intéressant au pic vers -22 ppm (caractéristique des composés comprenant des motifs D ayant une forte mobilité), on observe qu'il y a une proportion plus importante de ce type de motifs D « mobiles » (entre 15 et 45 %) à la surface des silices C-Ex 1 et C-Ex 2 qu'à la surface des silices obtenues selon l'invention (Ex-2 à Ex-5). Le greffage des silices C-Ex 1 et C-Ex 2 se distingue également par la faible proportion de groupements D^{OH}, comme observé sur les spectres RMN entre -5 et -13 ppm. Selon ce procédé, les chaînes greffées sont donc soit longues (faible concentration de D^{OH}) soit greffées des deux côtés.

Il est également à noter que les silices Ex-2 à Ex-5 et C-Ex 1, C-Ex 2 et C-Ex 4 sont toutes modifiées à partir de D₄, mais selon les procédés utilisés, les silices greffées obtenues sont différentes.

### Exemple 6.1 : production de silice greffée selon l'invention par un mélange de cyclotétrasiloxane et de cyclotétrasiloxane vinylé (Ex 6.1)

Dans un réacteur de 250 mL muni d'une agitation à enclume, 10 g de silice pyrogénée Aerosil© A200 ont été dispersés dans 100 g d'eau. 0,0765 g de sel NaCl ont ensuite été ajoutés. Après 30 minutes d'agitation à 500 tr/min, le pH de la dispersion de silice a été neutralisé par ajout d'une solution de soude de 10⁻¹ mol/L environ. 33.3 g d'IPA ont ensuite été ajoutés suivi de 22,06 g de D₄ et 0,5305 g de tétra(vinylméthyl)cyclosiloxane (D₄^{Vi}) respectivement. Le milieu a ensuite été chauffé à reflux pendant 24 h à 80°C avec une agitation de 300 tr/min. Après refroidissement, la silice a été récupérée par filtration sous vide à l'aide d'un fritté n°4, puis lavée 2 fois à l'heptane. Après séchage à 90°C sous vide pendant 24 h, le greffage des silices obtenues a été analysé par RMN du silicium à l'état solide, par ATG et par digestion du greffage suivi d'une analyse par chromatographie gazeuse.

### Exemple 6.2 : production de silice greffée selon l'invention par un mélange de cyclotétrasiloxane et de cyclotétrasiloxane vinylé (Ex 6.2)

Le même procédé que celui de l'exemple 6.1 a été mis en oeuvre, à la différence qu'ont été ajoutés 21,44 g de D₄ et 1,3126 de D₄^{Vi}.

### Exemple 6.3 : production de silice greffée selon l'invention par un mélange de cyclotétrasiloxane et de cyclotétrasiloxane vinylé (Ex 6.3)

Le même procédé que celui de l'exemple 6.1 a été mis en oeuvre, à la différence qu'ont été ajoutés 20,45 g de D₄ et 2,6163 de D₄^{Vi}.

### Exemple 7 : production de silice greffée par un cyclotétrasiloxane vinylé selon l'invention (Ex 7)

Le même procédé que celui de l'exemple 2 a été mis en oeuvre, à la différence que les 383,01 g de D₄ ont été remplacés par 444,6 de D₄^{Vi} et une étape de séchage à l'évaporateur rotatif à 150°C sous un vide de 5 mbar pendant 4 h a été ajoutée.

### Exemple 8.1 : production de silice greffée par un mélange de cyclotétrasiloxane et de cyclotétrasiloxane vinylé (Ex 8.1)

Le même procédé que celui de l'exemple 2 a été mis en oeuvre, à la différence que les 383,01 g de D₄ ont été remplacés par 382 g de D₄ et 1,03 g de D₄^{Vi} et une étape de séchage à l'évaporateur rotatif à 150°C sous un vide de 5 mbar pendant 4 h a été ajoutée.

### Exemple 8.2 : production de silice greffée par un mélange de cyclotétrasiloxane et de cyclotétrasiloxane vinylé (Ex 8.2)

Le même procédé que celui de l'exemple 2 a été mis en oeuvre, à la différence que les 383,01 g de D₄ ont été remplacés par 378 g de D₄ et 5 g de D₄^{Vi} et une étape de séchage à l'évaporateur rotatif à 150°C sous un vide de 5 mbar pendant 4 h a été ajoutée.

Le tableau II ci-dessous présente les résultats de la caractérisation de chacune des silices obtenues dans les exemples 6.1, 6.2, 6.3, 7, 8.1 et 8.2 : Tableau II

| Silice | Ethoxylation | | Perte de masse par ATG | | |
|---|---|---|---|---|---|
| | % D | % D^{vi} | < 200°C | entre 200 et 450°C | > 450°C |
| Ex 6.1 | 5,8 | 1,3 | 0,6 | 0,8 | 1,7 |
| Ex 6.2 | 5,2 | 1,2 | 0,6 | 0,8 | 2,0 |
| Ex 6.3 | 3,9 | 3,0 | 0,6 | 0,6 | 1,6 |
| Ex 7 | 0,3 | 48,0 | 21,1 | 3,2 | 6,9 |
| Ex 8.1 | 11,7 | 0,2 | 0,2 | 1,7 | 3,5 |
| Ex 8.2 | 8,3 | 0,5 | 0,4 | 1,7 | 3,3 |

| | | | | | |
|---|---|---|---|---|---|
| %D : pourcentage massique de motifs siloxyls D de formule (CH₃)₂SiO_{2/2}; %D^{vi} : pourcentage massique de motifs siloxyls D vinylés de formule (CH₃)(vinyl)SiO_{2/2}. | | | | | |

Les résultats présentés dans le tableau II montrent qu'il est possible, par le procédé selon l'invention, de greffer à la surface de la silice un composé organosilane fonctionnalisé. L'éthoxylation montre pour chaque exemple que le greffage est composé de groupements D vinylés (D^{Vi} de formule (R¹)(vinyle)SiO_{2/2}) à la surface.

Les exemples 6.1 à 6.3 et 8.1 et 8.2 selon l'invention, montrent qu'il est possible d'obtenir un greffage mixte avec un composé organosilane non fonctionnalisé et un composé organosilane fonctionnalisé, notamment vinylé à la surface de la silice, permettant ainsi de moduler le taux de groupements vinylés en surface, ce qui permet de moduler les propriétés des élastomères réticulables à chaud obtenus à partir de la silice selon l'invention. Ce greffage mixte présente les mêmes caractéristiques que pour les silices Ex 2 à Ex 4, à savoir une forte proportion de groupements D^{OH} et une faible proportion de groupements D « mobiles ».

L'ATG de la silice Ex 7 montre une perte de masse entre 200 et 450°C supérieure à celle obtenue habituellement avec les silices obtenues selon le procédé de l'invention, et le spectre RMN montre une forte proportion de groupements D^{Vi} « mobiles », ce qui indique que selon les conditions de l'exemple 7, le greffage obtenu pourrait comprendre une part de composé organosilane linéaire vinylé non greffé chimiquement.

### Exemple 9 : compositions d'élastomères de silicones réticulables à chaud (EVC) à base de silice modifiée selon les exemples 2 à 5, 7, 8.1 à 8.2, ainsi que selon les exemples comparatifs 1 à 4

Les différentes compositions d'élastomères de silicones ont été formulées sur la base de la formulation suivante :
- 67,4% en poids de gomme de polydiméthylsiloxane (PDMS) vinylée (masse moléculaire en poids = 500 kg/mol et masse moléculaire en nombre = 200 kg/mol),
- 1,4% en poids d'une huile PDMS hydroxylée,
- 30,6% de silice modifiée ou non,
- 0,6% en poids de catalyseur : un péroxyde organique (le 2,5-diméthyl-2,(-di(tertiobutylperoxy)hexane) empâté à 75% massique dans du silicagel.

Chaque composition a été préparée dans un mélangeur de type MEILI pendant 50 min. Le peroxyde a ensuite été ajouté à la composition à l'aide d'un mélangeur bicylindre, puis la composition a été réticulée sous pression pendant 10 min à 175°C.

Après 24h, ont été découpées des éprouvettes à l'emporte pièce correspondant à chaque composition (élastomère non recuit (NR)).

Un recuit pendant 4h à 200°C a également été appliqué à chacune des compositions puis des éprouvettes ont été découpées après 24h (élastomère recuit (R)).

Sur chaque éprouvette, des tests de traction ont été réalisés selon la norme ASTM D412. Ces tests permettent d'obtenir les propriétés à la rupture (comme la contrainte et l'élongation), mais également la mesure du module à 100%. D'autres tests, comme la résistance à la déchirure et la mesure de la dureté, ont été réalisés. Une évaluation visuelle de la transparence a également été effectuée. Elle a consisté à positionner une plaque de silicone à 15 cm d'un texte lisible et d'évaluer si le texte est facilement lisible ou non. la qualité est améliorée dans le sens suivant : (--), (-), (+) (++), avec (--) le moins bon résultat et (++) le meilleur résultat. Les résultats de ces tests et mesures (incluant les écarts-types notés E.T) sont présentés dans le tableau III ci-dessous.

**Tableau III**

| | Dureté | Résistance à la déchirure | | Contrainte à la rupture | | Elongation à la rupture | | Module à 100 % | | Transparence |
|---|---|---|---|---|---|---|---|---|---|---|
| | 5h A | N/mm | E.T. | Mpa | E.T. | % | E.T. | Mpa | E.T. | |
| Ex 2 (NR) | 45,3 | 20,3 | 1,0 | 8,0 | 0,1 | 655 | 7 | 0,8 | 0,0 | + |
| Ex 2 (R) | 55,9 | 21,4 | 1,3 | 10,5 | 1,4 | 554 | 48 | 1,2 | 0,0 | |
| Ex 3 (NR) | 56,4 | 16,9 | 0,1 | 6,3 | 0,8 | 477 | 37 | 1,5 | 0,1 | - |
| Ex 3 (R) | 62,0 | 16,3 | 0,5 | 5,3 | 0,5 | 284 | 21 | 2,4 | 0,1 | |
| Ex 4 (NR) | 52,4 | 17,4 | 0,3 | 8,9 | 0,4 | 661 | 21 | 1,0 | 0,0 | - |
| Ex 4 (R) | 62,6 | 18,3 | 0,6 | 8,5 | 1,0 | 419 | 22 | 1,8 | 0,0 | |
| Ex 5 (NR) | 52,0 | 12,8 | 0,1 | 4,7 | 0,3 | 490 | 19 | 1,1 | 0,0 | - |
| Ex 5 (R) | 56,6 | 14,6 | 0,2 | 5.3 | 0,4 | 420 | 23 | 1,5 | 0,0 | |
| C-Ex 1 (NR) | 42,4 | 19,8 | 0,5 | 6,9 | 0,4 | 619 | 21 | 0,7 | 0,0 | + |
| C-Ex 1 (R) | 53,9 | 22,2 | 1,4 | 10,7 | 0,8 | 598 | 36 | 1,1 | 0,0 | |
| C-Ex 2 (NR) | 46,4 | 18,1 | 2,4 | 5,4 | 0,3 | 541 | 19 | 0,9 | 0,0 | - |
| C-Ex 2 (R) | 53,2 | 18,4 | 0,2 | 5,8 | 0,2 | 453 | 13 | 1,2 | 0,0 | |
| C-Ex 3 (NR) | 71,6 | 22,9 | 0,6 | 9,2 | 1,2 | 513 | 35 | 1,5 | 0,0 | |
| C-Ex 3 (R) | 79 | 21,7 | 0,4 | 7,7 | 0,6 | 303 | 16 | 2,5 | 0,0 | |
| C-Ex 4 (NR) | 46,0 | 19,8 | 0,3 | 7,5 | 0,5 | 615 | 26 | 0,8 | 0,0 | |
| C-Ex 4 (R) | 54,1 | 22,6 | 1,1 | 11,4 | 0,3 | 612 | 14 | 1,1 | 0,0 | |
| Ex 7 (NR) | 82,9 | 20,6 | 0,8 | 3,7 | 0,1 | 67 | 7 | - | - | -- |
| Ex 7 (R) | 85,0 | 21,1 | 2,4 | 3,7 | 0,1 | 69 | 6 | - | - | |
| Ex 8.1 (NR) | 49,1 | 21,3 | 0,9 | 9,5 | 0,4 | 572 | 12 | 1,1 | 0,0 | + |
| Ex 8.1 (R) | 54,3 | 21,8 | 1,5 | 9,3 | 0,7 | 472 | 21 | 1,4 | 0,0 | |
| Ex 8.2 (NR) | 59,0 | 19,9 | 0,6 | 9,7 | 0,6 | 417 | 18 | 1,9 | 0,0 | ++ |
| Ex 8.2 (R) | 63,0 | 19,2 | 0,3 | 9,8 | 0,5 | 381 | 15 | 2,2 | 0,0 | |

| | | | | | | | | | | |
|---|---|---|---|---|---|---|---|---|---|---|
| (NR) : élastomère non recuit après réticulation de 10 min à 170°C (R) : élastomère recuit (recuisson de 4 h à 200°C après réticulation de 10 min à 170°C) E.T. : Ecart Type | | | | | | | | | | |

Les résultats obtenus avec la silice de l'Ex 2 montrent que le traitement est efficace, dans la mesure où il réduit les interactions entre la silice et la matrice silicone. En effet, l'élastomère obtenu avec la silice brute C-Ex 3 présente une dureté Shore A et un module à 100 % beaucoup plus élevés que pour l'élastomère renforcé de silice de l'Ex 2. La contrainte à la rupture est relativement similaire pour les deux élastomères, mais le traitement permet d'obtenir une élongation à la rupture plus importante. Il est également important de noter que la dispersion de la silice brute C-Ex 3 est beaucoup plus longue que pour la silice modifiée ; il a fallu environ cinq fois plus de temps pour incorporer l'ensemble de la silice brute dans la gomme silicone. Le mélange silice/gomme est par ailleurs beaucoup plus dur et difficilement modelable avec la silice C-Ex 3 qu'avec la silice Ex 2. Le traitement au D₄ selon l'invention facilite donc l'incorporation de la silice et permet de réduire les interactions silice/gomme.
De plus, l'élastomère obtenu avec la silice Ex 2, présente des propriétés quasi-identiques à celles de l'élastomère renforcé de la silice C-Ex 4 qui est modifiée par pulvérisation de D₄ et traitement thermique (que ce soit en termes de propriétés mécaniques que de transparence de l'élastomère). Le procédé de la présente invention permet donc d'effectuer des traitements de charges aussi performants que ceux réalisés industriellement.
Les propriétés de l'élastomère renforcé de silice Ex 4 sont bonnes, mais légèrement différentes (de celles de l'élastomère renforcé de silice Ex 2 ou C-Ex 4). La silice est moins traitée, elle est donc plus renforçante, ce qui se traduit par un module à 100 % et une dureté plus élevés, une contrainte à la rupture similaire et une élongation à la rupture plus faible.
Les résultats obtenus avec la silice selon les exemples 3 et 5 (Ex 3 et Ex 5) sont moins bons, car la silice est mal dispersée. Dans le premier cas, cela s'explique par un greffage trop faible, la silice est encore trop hydrophile pour être finement divisée après l'étape de séchage. Dans le second cas, cela s'explique par un greffage trop important qui semble nuire à la dispersion.

Les élastomères renforcés des silices C-Ex 1 et C-Ex 2 ont des propriétés totalement différentes. En effet il est à noter que la silice C-Ex 2 se disperse très mal ce qui diminue drastiquement les propriétés mécaniques. Ceci s'explique par un taux de greffage trop important à la surface de la silice C-Ex 2.

Les silices obtenues selon le procédé de l'invention peuvent rivaliser avec les silices industrielles comme la silice C-Ex 4. Mais un autre avantage de cette invention (en plus du fait qu'elle soit réalisée en milieu neutre) est qu'il est de plus possible d'introduire des groupements vinylés en plus de groupements D à la surface.

L'ajout de groupements vinylés à la surface (Ex 8.1 et Ex 8.2) permet de moduler les propriétés des silicones à taux de silice constant. Ainsi, pour une même concentration de silice, une augmentation du taux de vinyle augmente la dureté plus particulièrement pour les mélanges non-recuits, ainsi que s et le module à 100%. Un autre effet de la présence de ces groupements vinylés est que plus le nombre de groupements vinylés à la surface augmente, plus l'écart entre les propriétés de l'élastomère avant et après recuit diminue. Par exemple, avec la silice Ex 8.2, les propriétés après réticulation sont très proches de celles obtenues après recuit. Pour ces élastomères renforcés de silice au greffage mixte, la contrainte à la rupture reste semblable, mais l'élongation à la rupture diminue du fait d'une réticulation accrue du réseau élastomérique due à l'apport de groupements vinyles à la surface de la silice.

La transparence des élastomères de silicone est également améliorée, notamment lorsque la silice possède un greffage mixte de composé organosilane non fonctionnalisé et de composé organosilane vinylé (silice Ex 8.2). Il semblerait que ce soit la présence des groupements vinyles chimiquement liés à la surface (comme le permet l'invention) qui permette d'améliorer la transparence.

La silice Ex 7 se disperse très mal du fait de son fort taux de greffage (comme pour les silices Ex 5 et C-Ex 2). Cela explique les faibles propriétés mécaniques de l'élastomère renforcé par la silice issue de l'exemple 7.

## Revendications

1. Procédé de préparation d'une silice greffée par au moins un composé organosilicié choisi parmi le groupe constitué par :
- un cyclosiloxane,
- un composé bi-silanol de formule R₂Si(OH)₂, les groupements R, identiques ou différents, représentant un groupement alkyle en c₁-C₁₀, de préférence en C₁-C₃, avantageusement un méthyle, un groupement alcényle, de préférence vinyle, un groupement aryle, de préférence phényle,
- un polyorganosiloxane de formule (I) suivante :
(R'₃SiO)(R'₂SiO)ₐ(R'₂SiOH)
• formule dans laquelle :
∘ les groupements R', identiques ou différents, représentent un groupement alkyle en C₁-C₁₀, de préférence en C₁-C₃, avantageusement un méthyle, un groupement alcényle, de préférence vinyle, un groupement aryle, de préférence phényle ou un groupement -OH,
∘ et le symbole a est un nombre entier compris entre 1 et 30 et de préférence entre 3 et 30,
- et leurs mélanges ;
ledit procédé comprenant les étapes suivantes:
a) on prépare un mélange aqueux de pH compris entre 6 et 11, de préférence entre 6,5 et 9,5 et encore plus préférentiellement de 7 environ, par ajout dans un milieu aqueux d'une silice et éventuellement d'une base,
b) on ajoute au mélange ledit composé organosilicié,
c) le mélange est chauffé, de préférence à reflux, pendant une durée supérieure ou égale à 1 heure, de préférence supérieure ou égale à 20 heures, et à une température comprise entre 50°C et 100°C, de préférence comprise entre 70°C et 100°C, et
d) la silice greffée est séparée du mélange.

2. Procédé selon la revendication 1 comprenant une étape supplémentaire a') effectuée entre les étapes a) et b) qui consiste à ajouter au mélange :
∘ un solvant miscible à l'eau et compatible avec ledit composé organosilicié de manière à faciliter la mise en contact entre le composé organosilicié et la silice, de préférence choisi parmi le groupe constitué par: l'éthanol, l'isopropanol, le tétrahydrofurane, la méthyléthylcétone, et leurs mélanges, et/ou
∘ un sel, de préférence choisi dans le groupe constitué par les sels de sodium, de potassium, d'ammonium, de pyridinium et leurs mélanges.

3. Procédé selon l'une quelconque des revendications précédentes comprenant une étape supplémentaire c') effectuée entre les étapes c) et d) qui consiste à ajouter au mélange un solvant non miscible à l'eau.

4. Procédé selon l'une quelconque des revendications précédentes **caractérisé en ce qu'**on effectue après l'étape d) les étapes suivantes :
e) on sèche la silice greffée issue de l'étape d), et
f) on broie la silice greffée.

5. Procédé selon l'une quelconque des revendications précédentes **caractérisé en ce que** la silice est une silice pyrogénée.

6. Procédé selon la revendication 1 dans lequel le cyclosiloxane a la formule **(II)** suivante : 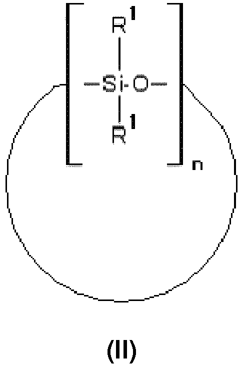 avec :
- n = 3, 4, 5, 6, 7 ou 8 ; et :
- lorsque le cyclosiloxane est un cyclosiloxane non fonctionnalisé, les symboles R¹, identiques ou différents, représentent un radical alkyle en C₁-C₁₂, linéaire ou ramifié, éventuellement substitué, un radical cycloalkyle en C₅-C₁₀, éventuellement substitué, un radical aryle en C₆-C₁₈ éventuellement substitué ou un radical aralkyle, éventuellement substitué, et
- lorsque le cyclosiloxane est un cyclosiloxane fonctionnalisé, au moins l'un des symboles R¹ représente un radical alcényle, de préférence en C₂-C₄ et encore plus préférentiellement un radical vinyle.

7. Procédé selon l'une quelconques des revendications 1 et 6 **caractérisé en ce que** le cyclosiloxane est choisi parmi le groupe constitué par l'octaméthylcyclotétrasiloxane, le tétraméthyltétravinylcyclotétrasiloxane et leur mélange.

8. Procédé selon la revendication 1 **caractérisé en ce que** le mélange de composés organosiliciés comprend :
• au moins un cyclosiloxane non fonctionnalisé de formule (II) tel que définie selon la revendication 6, et
• au moins un cyclosiloxane fonctionnalisé de formule (II) telle que définie selon la revendication 6.

9. Procédé selon la revendication 2, **caractérisé en ce que** le % poids du ratio sel /silice est compris entre 0,1 et 10%, de préférence entre 0,5 et 5%.

10. Silice greffée par au moins un composé organosilicié choisi parmi le groupe constitué par :
- un cyclosiloxane,
- un composé bi-silanol de formule R₂Si(OH)₂, les groupements R, identiques ou différents, représentant un groupement alkyle en C₁-C₁₀, de préférence en C₁₋C₃, avantageusement un méthyle, un groupement alcényle, de préférence vinyle, un groupement aryle, de préférence phényle,
- un polyorganosiloxane de formule (I) suivante :
(R'₃SiO) (R'₂SiO)ₐ(R'₂SiOH)
formule dans laquelle :
les groupements R', identiques ou différents, représentent un groupement alkyle en C₁-C₁₀, de préférence en C₁-C₃, avantageusement un méthyle, un groupement alcényle, de préférence vinyle, un groupement aryle, de préférence phényle ou un groupement -OH,
et le symbole a est un nombre entier compris entre 1 et 30 et de préférence entre 3 et 30,
- et leurs mélanges ;
susceptible d'être obtenue par un procédé tel que décrit selon l'une quelconque des revendications précédentes.

11. Silice greffée selon la revendication 10 **caractérisée par** la présence en surface de fonctions Si-O-G avec G étant un greffon siloxane comprenant :
i) au moins deux motifs siloxyl D de formule (R¹)₂SiO_{2/2},
ii) et au moins un motif siloxyl terminal D^{OH} de formule (R¹)₂(OH)SiO_{1/2}, formules dans lesquelles les symboles R¹, identiques ou différents, représentent un radical alkyle en C₁-C₁₂, linéaire ou ramifié, éventuellement substitué, un radical cycloalkyle en C₅-C₁₀, éventuellement substitué, un radical aryle en C₆-C₁₈ éventuellement substitué, un radical aralkyle, éventuellement substitué ou un radical alcényle, de préférence en C₂-C₄.

12. Silice greffée selon la revendication 11 **caractérisée en ce que** le greffon siloxane G comprend entre 2 et 31 motifs siloxyl D et au moins un motif siloxyl terminal D^{OH}.

13. Silice greffée selon l'une quelconque des revendications 10 à 12 **caractérisée par** la présence en surface de fonctions Si-O-G avec G étant un greffon siloxane comprenant :
i) 3 motifs siloxyl D de formule (CH₃)₂SiO_{2/2} et 1 motif siloxyl terminal D^{OH} de formule (CH₃)₂(OH)SiO_{1/2}, ou
ii) 3 motifs siloxyl D^{Vi} de formule (CH₃)(CH₂=CH₂-)SiO_{2/2} et 1 motif siloxyl terminal D^{OH} de formule (CH₃)₂(OH)SiO_{1/2}.

14. Silice greffée selon l'une quelconque des revendications 10 à 13 **caractérisée par** :
i) analyse thermo-gravimétrique (ATG) avec une élévation de température de 50°C par minute et mesurée entre 200°C et 450°C, d'une perte de masse supérieure ou égale à 0,55%, de préférence comprise entre 0,55 et 3%,
ii) analyse thermo-gravimétrique (ATG) avec une élévation de température de 50°C par minute et mesurée à une température supérieure à 450°C, d'une perte de masse réalisée supérieure à 1,1%, et
iii) la présence d'un pic entre -5 et -15 ppm dans un spectre obtenu par résonance magnétique nucléaire de l'élément chimique ²⁹Si à l'état solide.

15. Composition de silicone réticulable en élastomère comprenant au moins une silice greffée telle que définie selon l'une quelconque des revendications 10 à 14.

16. Composition selon la revendication précédente **caractérisée en ce que** la teneur en poids de silice greffée par rapport au poids total de la composition est comprise entre 0,1 et 80% en poids, de préférence entre 1 et 50% en poids.

17. Elastomère de silicone obtenu par réticulation d'une composition telle que définie selon la revendication 15 ou 16.

18. Article comprenant un élastomère de silicone tel que défini selon la revendication précédente.

19. Composition de dentifrice comprenant une silice greffée telle que définie selon l'une quelconque des revendications 10 à 14.

20. Composition antimousse comprenant une silice greffée telle que définie selon l'une quelconque des revendications 10 à 14.

## Patentansprüche

1. Verfahren zur Herstellung eines mit mindestens einer Organosiliciumverbindung gepfropften Kieselsäure, die ausgewählt aus der Gruppe bestehend aus:
- ein Cyclosiloxan,
- eine Bi-Silanolverbindung der Formel R₂Si(OH)₂, wobei die Gruppen R, identisch oder unterschiedlich, eine C₁-C₁₀, vorzugsweise C₁-C₃ Alkylgruppe, vorteilhafterweise ein Methyl, eine Alkenylgruppe, vorzugsweise Vinyl, eine Arylgruppe, vorzugsweise Phenyl darstellen,
- ein Polyorganosiloxan der folgenden Formel (I):
(R'₃SiO)(R'₂SiO)ₐ(R'₂SiOH)
• wobei in der Formel:
∘ die Gruppen R', identisch oder unterschiedlich, eine C₁-C₁₀, vorzugsweise C₁-C₃ Alkylgruppe, vorteilhafterweise ein Methyl, eine Alkenylgruppe, vorzugsweise Vinyl, eine Arylgruppe, vorzugsweise Phenyl oder eine -OH-Gruppe darstellen,
∘ und das Symbol a eine ganze Zahl zwischen 1 und 30, und vorzugsweise zwischen 3 und 30 ist,
- und ihre Mischungen;
wobei das Verfahren die folgenden Schritte umfasst:
a) eine wässrige Mischung mit einem pH-Wert zwischen 6 und 11, vorzugsweise zwischen 6,5 und 9,5 und noch bevorzugter von ungefähr 7 durch Hinzufügen einer Kieselsäure und gegebenenfalls einer Base in einem wässrigens Medium hergestellt wird,
b) die Organosiliciumverbindung der Mischung hinzugefügt wird,
c) die Mischung aufgeheizt wird, vorzugsweise bei Rückfluss, während einer Dauer größer oder gleich einer Stunde, vorzugsweise größer oder gleich 20 Stunden, und bei einer Temperatur zwischen 50°C und 100°C, vorzugsweise zwischen 70°C und 100°C, und
d) die gepfropfte Kieselsäure von der Mischung getrennt wird.

2. Verfahren nach Anspruch 1, umfassend einen zusätzlichen Schritt a'), der zwischen den Schritten a) und b) durchgeführt wird und darin besteht, der Mischung hinzuzufügen:
∘ ein Lösungsmittel, das mit Wasser mischbar ist und mit der Organosiliciumverbindung derart kompatibel ist, dass das Inkontaktbringen zwischen der Organosiliciumverbindung und der Kieselsäure erleichtert wird, vorzugsweise ausgewählt aus der Gruppe, die besteht aus: Ethanol, Isopropanol, Tetrahydrofuran, Methylethylketon und ihren Mischungen, und/oder
∘ ein Salz, vorzugsweise ausgewählt aus der Gruppe, die besteht aus Natrium-, Kalium-, Ammonium-, Pyridiniumsalzen und ihren Mischungen.

3. Verfahren nach einem beliebigen der vorhergehenden Ansprüche, umfassend einen zusätzlichen Schritt c'), der zwischen den Schritten c) und d) durchgeführt wird und darin besteht, ein nicht mit Wasser mischbares Lösungsmittel der Mischung hinzuzufügen.

4. Verfahren nach einem beliebigen der vorhergehenden Ansprüche, **dadurch gekennzeichnet, dass** nach dem Schritt d) die folgenden Schritte durchgeführt werden:
e) die aus dem Schritt d) stammende gepfropfte Kieselsäure getrocknet wird, und
f) die gepfropfte Kieselsäure zerkleinert wird.

5. Verfahren nach einem beliebigen der vorhergehenden Ansprüche, **dadurch gekennzeichnet, dass** die Kieselsäure ein pyrogene Kieselsäure ist.

6. Verfahren nach Anspruch 1, bei dem das Cyclosiloxan die folgende Formel (II) aufweist: 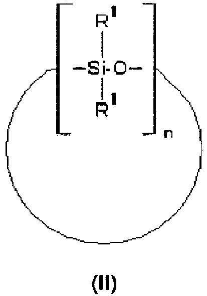 mit:
- n =3, 4, 5, 6, 7 oder 8; und:
- wenn das Cyclosiloxan ein nichtfunktionalisiertes Cyclosiloxan ist, die Symbole R¹, identisch oder unterschiedlich, ein C₁-C₁₂ Alkylradikal, linear oder verstärkt, gegebenenfalls substituiert, ein C₅-C₁₀ Cycloalkylradikal, gegebenenfalls substituiert, ein C₆-C₁₈ Arylradikal, gegebenenfalls substituiert, oder ein Aralkylradikal, gegebenenfalls substituiert, darstellten, und
- wenn das Cyclosiloxan ein funktionalisiertes Cyclosiloxan ist, mindestens eines der Symbole R¹ ein Alkenylradikal, vorzugsweise ein C₂-C₄ Alkenylradikal und noch bevorzugter ein Vinylradikal darstellt.

7. Verfahren nach einem beliebigen der Ansprüche 1 bis 6, **dadurch gekennzeichnet, dass** das Cyclosiloxan ausgewählt ist aus der Gruppe, die gebildet wird aus Oktamethylcyclotetrasiloxan, Tetramethyltetravinylcyclotetrasiloxan und ihrer Mischung.

8. Verfahren nach Anspruch 1, **dadurch gekennzeichnet, dass** die Mischung der Organosiliciumverbindung umfasst:
• mindestens ein nichtfunktionalisiertes Cyclosiloxan der Formel (II) wie nach Anspruch 6 definiert, und
• mindestens ein funktionalisiertes Cyclosiloxan der Formel (II) wie nach Anspruch 6 definiert.

9. Verfahren nach Anspruch 2, **dadurch gekennzeichnet, dass** die Gewichtsprozente des Verhältnisses Salz/Kieselsäure zwischen 0,1 und 10%, vorzugsweise zwischen 0,5 und 5% liegen.

10. Kieselsäure, gepfropft mit mindestens einer Organosiliciumverbindung, die ausgewählt ist aus der Gruppe bestehend aus:
- ein Cyclosiloxan,
- eine Bi-Silanolverbindung der Formel R₂Si(OH)₂, wobei die Gruppen R, identisch oder unterschiedlich, eine C₁-C₁₀, vorzugsweise C₁-C₃ Alkylgruppe, vorteilhafterweise ein Methyl, eine Alkenylgruppe, vorzugsweise Vinyl, eine Arylgruppe, vorzugsweise Phenyl darstellen,
- ein Polyorganosiloxan der folgenden Formel (I):
(R'₃SiO)(R'₂SiO)ₐ(R'₂SiOH)
• wobei in der Formel:
∘ die Gruppen R', identisch oder unterschiedlich, eine C₁-C₁₀, vorzugsweise C₁-C₃ Alkylgruppe, vorteilhafterweise ein Methyl, eine Alkenylgruppe, vorzugsweise Vinyl, eine Arylgruppe, vorzugsweise Phenyl oder eine -OH-Gruppe darstellen,
∘ und das Symbol a eine ganze Zahl zwischen 1 und 30, und vorzugsweise zwischen 3 und 30 ist,
- und ihre Mischungen;
geeignet durch ein Verfahren erhalten zu werden, wie es gemäß einem beliebigen der vorhergehenden Ansprüche beschrieben ist.

11. Gepfropfte Kieselsäure nach Anspruch 10, **gekennzeichnet durch** die Flächenanwesenheit der Funktionen Si-O-G, wobei G eine Siloxan-Pfropf ist, die umfasst:
i) mindestens zwei Siloxyl-Einheiten D der Formel (R¹)₂SiO_{2/2},
ii) und mindestens eine endständige Siloxyl-Einheit D^{OH} der Formel (R¹)₂(OH)SiO_{1/2},
wobei in den Formeln die Symbole R¹, identisch oder unterschiedlich ein C₁-C₁₂ Alkylradikal, linear oder verstärkt, gegebenenfalls substituiert, ein C₅-C₁₀ Cycloalkylradikal, gegebenenfalls substituiert, ein C₆-C₁₈ Arylradikal, gegebenenfalls substituiert, ein Aralkylradikal, gegebenenfalls substituiert, oder ein Alkenylradikal, vorzugsweise ein C₂-C₄ Alkenylradikal darstellen.

12. Gepfropfte Kieselsäure nach Anspruch 11, **dadurch gekennzeichnet, dass** der Siloxan-Pfropf G zwischen 2 und 31 Siloxyl-Einheiten D und mindestens eine endständige Siloxyl-Einheit D^{OH} enthält.

13. Gepfropfte Kieselsäure nach einem beliebigen der Ansprüche 10 bis 12, **gekennzeichnet, durch** die Flächenanwesenheit der Funktionen Si-O-G, wobei G eine Siloxan-Pfropf ist, umfassend:
i) 3 Siloxyl-Einheiten D der Formel (CH₃)₂SiO_{2/2} und eine endständige Siloxyl-Einheit D^{OH} der Formel (CH₃)₂(OH)SiO_{1/2}), oder
ii) 3 Siloxyl-Einheiten D^{VI} der Formel (CH₃)(CH₂=CH₂-)SiO_{2/2} und eine endständige Siloxyl-Einheit D^{OH} der Formel (CH₃)₂(OH)SiO_{1/2}.

14. Gepfropfte Kieselsäure nach einem beliebigen der Ansprüche 10 bis 13, **gekennzeichnet durch**:
i) thermogravimetrische Analyse (ATG) mit einer Erhöhung der Temperatur von 50°C pro Minute und gemessen zwischen 200°C und 450°C eines Massenverlustes größer oder gleich 0,55%, vorzugsweise zwischen 0,55 und 3%,
ii) thermogravimetrische Analyse (ATG) eines Massenverlustes, der größer als 1,1% realisiert ist, mit einer Temperaturerhöhung von 50°C pro Minute und gemessen bei einer Temperatur größer als 450°C, und
iii) das Vorhandensein einer Spitze zwischen -5 und -15 ppm in einem Spektrum, das durch Kernspinresonanz des chemischen Elements ²⁹Si im Festzustand erhalten wird.

15. Vernetzbare Silikonelastomerzusammensetzung, enthaltend mindestens eine gepfropftes Kieselsäure, wie sie nach einem der Ansprüche 10 bis 14 definiert ist.

16. Zusammensetzung nach dem vorhergehenden Anspruch, **dadurch gekennzeichnet, dass** der Gewichtsanteil an gepfropfter Kieselsäure in Bezug auf das Gesamtgewicht der Zusammensetzung zwischen 0,1 und 80 Gew.-%, vorzugsweise zwischen 1 und 50 Gew.-% liegt.

17. Silikonelastomer, das durch Vernetzung einer Zusammensetzung erhalten wird, wie sie nach Anspruch 15 oder 16 definiert ist.

18. Artikel, ein Silikonelastomer enthaltend, wie es nach dem vorhergehenden Anspruch definiert ist.

19. Zahncremezusammensetzung, enthaltend eine gepfropfte Kieselsäure, wie es nach einem beliebigen der Ansprüche 10 bis 14 definiert ist.

20. Antischaumzusammensetzung, enthaltend eine gepfropftee Kieselsäure enthaltend, wie es nach einem beliebigen der Ansprüche 10 bis 14 definiert ist.

## Claims

1. Method for preparing a silica grafted with at least one organosilicon compound chosen from the group consisting of:
- a cyclosiloxane,
- a bi-silanol compound having the formula R₂Si(OH)₂, the groups R, identical or different, representing a C₁-C₁₀ alkyl group, preferably C₁-C₃, advantageously a methyl, an alkenyl group, preferably vinyl, an aryl group, preferably phenyl,
- a polyorganosiloxane having the following formula (I):
(R'₃SiO)(R'₂SiO)ₐ(R'₂SiOH)
• wherein:
∘ the groups R', identical or different, represent a C₁-C₁₀ alkyl group, preferably C₁-C₃, advantageously a methyl, an alkenyl group, preferably vinyl, an aryl group, preferably phenyl or an -OH group,
∘ and the symbol a is an integer between 1 and 30 and preferably between 3 and 30,
- and mixtures thereof;
said method comprising the following steps:
a) the preparation of an aqueous mixture having a pH between 6 and 11, preferably between 6.5 and 9.5 and more preferentially of approximately 7, by adding in an aqueous medium a silica and optionally a base,
b) the said organosilicon compound is added to the mixture,
c) the mixture is heated, preferably at reflux, for a time greater than or equal to 1 hour, preferably greater than or equal to 20 hours, and at a temperature between 50°C and 100°C, preferably between 70°C and 100°C, and
d) the grafted silica is separated from the mixture.

2. Method according to claim 1 comprising a further step a') performed between steps a) and b) consisting of adding to the mixture:
∘ a water-miscible solvent compatible with said organosilicon compound so as to facilitate contact between the organosilicon compound and the silica, preferably chosen from the group consisting of: ethanol, isopropanol, tetrahydrofuran, methyl ethyl ketone, and mixtures thereof, and/or
∘ a salt, preferably chosen from the group consisting of sodium, potassium, ammonium, pyridinium salts and mixtures thereof.

3. Method according to any of the above claims comprising a further step c') performed between steps c) and d) consisting of adding a non-water miscible solvent to the mixture.

4. Method according to any of the above claims **characterised in that** the following steps are performed after step d):
e) the grafted silica from step d) is dried, and
f) the grafted silica is ground.

5. Method according to any of the above claims **characterised in that** the silica is fumed silica.

6. Method according to claim 1 wherein the cyclosiloxane has the following formula (II): 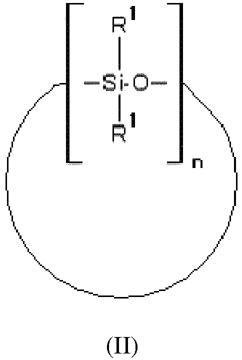 where:
- n = 3, 4, 5, 6, 7 or 8; and:
- if the cyclosiloxane is a non-functionalised cyclosiloxane, the symbols R¹, identical or different, represent an optionally substituted linear or branched C₁-C₁₂ alkyl radical, an optionally substituted C₅-C₁₀ cycloalkyl radical, an optionally substituted C₆-C₁₈ aryl radical or an optionally substituted aralkyl radical, and
- if the cyclosiloxane is a functionalised cyclosiloxane, at least one of the symbols R¹ represents an alkenyl radical, preferably C₂-C₄ and more preferentially a vinyl radical.

7. Method according to any of claims 1 and 6 **characterised in that** the cyclosiloxane is chosen from the group consisting of octamethylcyclotetrasiloxane, and tetramethyltetravinylcyclotetrasiloxane and mixtures thereof.

8. Method according to claim 1 **characterised in that** the mixture of organosilicon compounds comprises:
• at least one non-functionalised cyclosiloxane having formula (II) as defined according to claim 6, and
• at least one functionalised cyclosiloxane having formula (II) as defined according to claim 6.

9. Method according to claim 2, **characterised in that** the % by weight of the salt/silica ratio is between 0.1 and 10%, preferably between 0.5 and 5%

10. Silica grafted with at least one organosilicon compound chosen in the group consisting of:
- a cyclosiloxane;
- a bi-silanol compound having the formula R₂Si(OH)₂, the groups R, identical or different, representing a C₁-C₁₀ alkyl group, preferably C₁-C₃, advantageously a methyl, an alkenyl group, preferably vinyl, an aryl group, preferably phenyl,
- a polyorganosiloxane having the following formula (I):
(R'₃SiO)(R'₂SiO)ₐ(R'₂SiOH)
• wherein:
∘ the groups R', identical or different, represent a C₁-C₁₀ alkyl group, preferably C₁-C₃, advantageously a methyl, an alkenyl group, preferably vinyl, an aryl group, preferably phenyl or an -OH group,
∘ and the symbol a is an integer between 1 and 30 and preferably between 3 and 30,
- and mixtures thereof;
suitable for being obtained using a method as described according to any of the above claims.

11. Grafted silica according to claim 10 **characterised by** the presence on the surface of Si-O-G functions where G is a siloxane graft comprising:
i) at least two siloxyl D units having the formula (R¹)₂SiO_{2/2},
ii) and at least one terminal siloxyl D^{OH} unit having the formula (R¹)₂(OH)SiO_{1/2},
wherein the symbols R¹, identical or different, represent an optionally substituted linear or branched C₁-C₁₂ alkyl radical, an optionally substituted C₅-C₁₀ cycloalkyl radical, an optionally substituted C₆-C₁₈ aryl radical or an optionally substituted aralkyl radical or an alkenyl radical, preferably C₂-C₄.

12. Grafted silica according to claim 11 **characterised in that** the siloxane graft G comprises between 2 and 31 siloxyl D units and at least one terminal siloxyl D^{OH} unit.

13. Grafted silica according to any of claims 10 to 12 **characterised by** the presence on the surface of Si-O-G functions where G is a siloxane graft comprising:
i) 3 siloxyl D units having the formula (CH₃)₂SiO_{2/2} and 1 D^{OH} terminal siloxyl unit having the formula (CH₃)₂(OH)SiO_{1/2}, or
ii) 3 siloxyl D^{Vi} units having the formula (CH₃)(CH₂=CH₂-)SiO_{2/2} and 1 D^{OH} terminal siloxyl unit having the formula (CH₃)₂(OH)SiO_{1/2}.

14. Grafted silica according to any of claims 10 to 13 **characterised by**:
i) thermogravimetic analysis (TGA) with a temperature rise of 50°C per minute and measured between 200°C and 450°C, of a mass loss greater than or equal to 0.55%, preferably between 0.55 and 3%,
ii) thermogravimetic analysis (TGA) with a temperature rise of 50°C per minute and measured at a temperature greater than 450°C, of a mass loss obtained greater than 1.1%, and
iii) the presence of a peak between -5 and -15 ppm in a spectrum obtained by means of nuclear magnetic resonance of the chemical element ²⁹Si in the solid state.

15. Silicone composition crosslinkable into an elastomer comprising at least one grafted silica as defined according to any of claims 10 to 14.

16. Composition according to the above claim **characterised in that** the content by weight of grafted silica in relation to the total weight of the composition is between 0.1 and 80% by weight, preferably between 1 and 50% by weight.

17. Silicone elastomer obtained by crosslinking a composition as defined according to claim 15 or 16.

18. Article comprising a silicone elastomer as defined according to the above claim.

19. Toothpaste composition comprising a grafted silica as defined according to any of claims 10 to 14.

20. Anti-foaming composition comprising a grafted silica as defined according to any of claims 10 to 14.
